# EUROPÄISCHE PATENTSCHRIFT

(11) **EP 2 905 108 B1**
(45) Veröffentlichungstag und Bekanntmachung des Hinweises auf die Patenterteilung: **14.09.2016**
(21) Anmeldenummer: 15151875.0
(22) Anmeldetag: 21.01.2015
(51) Int. Cl.: B23Q 11/00, B23K 37/00, B23K 20/10

(54) **Gestell für eine Maschine**
Frame for a machine
Châssis d'une machine

(30) Priorität: 10.02.2014 DE 102014101627
(43) Veröffentlichungstag der Anmeldung: 12.08.2015
(73) Patentinhaber: MS Ultraschall Technologie GmbH, 78549 Spaichingen (DE)
(72) Erfinder: Krell, Volker, 78579 Neuhausen ob Eck (DE)
(74) Vertreter: Manitz, Finsterwald & Partner GbR

(56) Entgegenhaltungen:
- DD-A1- 99 938
- DE-A1- 1 938 071
- DE-U1- 8 316 643
- JP-A- S6 080 508
- US-A- 3 684 395

## Beschreibung

Die vorliegende Erfindung betrifft ein Gestell für eine Maschine, beispielsweise eine Stanz-, Präge- oder Schweißmaschine, insbesondere für eine Ultraschall-Schweißmaschine, mit einer als Standfuß für die Schweißmaschine dienenden Grundplatte, einer mit der Grundplatte biegesteif verbundenen Säule, entlang derer eine Führungsschiene vorgesehen ist, und einem Linearantrieb, mit dem eine Kraft von einer als Arbeitsorgan dienenden Sonotrode der Schweißmaschine auf ein auf der Grundplatte positionierbares Werkstück aufgebracht werden kann.

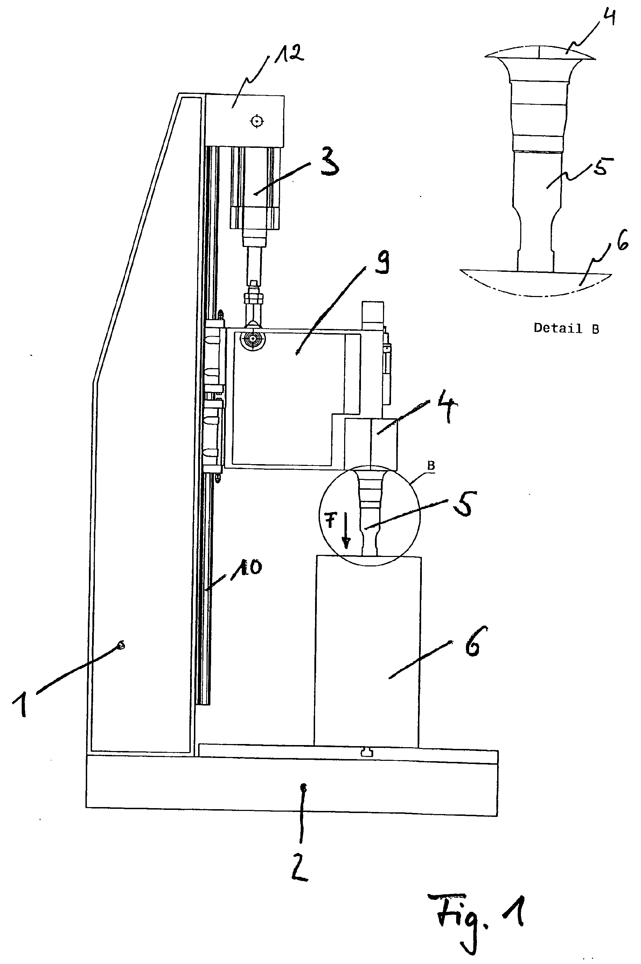

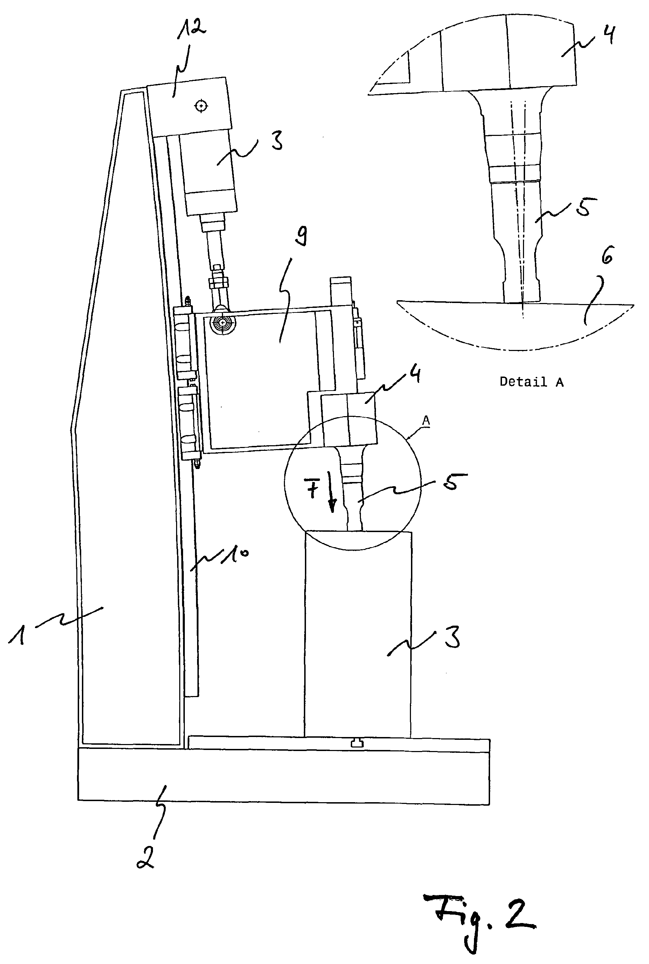

Solch ein an sich bekanntes Gestell ist in den Fig. 1 und 2 dargestellt. Wie bereits erwähnt, weist das dargestellte Gestell 20 eine Grundplatte 2 auf, auf der ein zu schweißendes Werkstück 6 angeordnet werden kann und die biegesteif mit einer aufrechtstehenden Säule 1 verbunden ist. Am obersten Ende der Säule 1 ist an derselben ein Kragarm 12 vergleichsweise biegesteif angebracht, der seinerseits einen Antrieb 3 zur Erzeugung der benötigten Schweißkraft F trägt. Die Schweißkraft F des Antriebs 3 wird über einen Schlitten 9, der entlang einer Führungsschiene 10 an der Säule 1 in vertikaler Richtung verschieblich geführt ist, auf eine als Arbeitsorgan dienende Sonotrode 5 übertragen, die von dem Schlitten 9 getragen wird und die von einem Schwinggebilde 4 an dem Schlitten 9 zu hochfrequenten Schwingungen angeregt wird.

Wird nun mit Hilfe des Antriebs 3 über die Sonotrode 5 die erforderliche Schweißkraft F auf das Werkstück 6 aufgebracht, so kann dies dazu führen, dass sich das Gestell 20 und insbesondere die Säule 1 elastisch verformt und verbiegt, wie dies in der Fig. 2 schematisch dargestellt ist. Wie dieser Figur entnommen werden kann, wurde die Säule 1 infolge der Aufbringung der Schweißkraft F auf das Werkstück 6 nach links gebogen, was in unerwünschter Weise dazu führt, dass der Kopf der Sonotrode 5 nicht mehr in der gewünschten Weise vollflächig auf der Oberfläche des Werkstücks 6 aufsteht, wie dies insbesondere in dem vergrößerten Detail "A" der Fig. 2 erkannt werden kann. Solch eine Unparallelität zwischen Sonotrode 5 und Werkstück 6 kann jedoch in unerwünschter Weise zu Lasten des Arbeitsergebnisses und insbesondere zu Lasten der Schweißnahtgüte gehen.

Ein anderes Gestell ist ferner aus der Druckschrift DE 83 16 643 U1 bekannt geworden. Dieses Gestell weist Merkmale des Obergriffs des Anspruch 1 auf und besitzt insbesondere eine in der Art eines Galgens ausgebildete Aufhängeeinrichtung, an der über ein Aufhängelement ein Spindelkasten aufgehängt ist. Allerdings lässt sich über die galgenartige Aufhängeeinrichtung nur das Eigengewicht des Spindelkastens abtragen, da die Aufhängeeinrichtung nur mittels einer Rolle auf der Lauffläche eines balkenartigen Abstützelements gelagert ist. Über die galgenartige Aufhängeeinrichtung können somit keine abhebenden Kräfte abgetragen werden, d.h. keine Kräfte, die infolge einer Kraftbeaufschlagung durch ein Werkzeug entstehen können.

Der Erfindung liegt somit die Aufgabe zugrunde, ein Gestell für eine Schweißmaschine zu schaffen, bei dem eine Verbiegung des Gestells, die auf abhebende Kräfte zurückzuführen ist, welche als Reaktion zu auf ein Werkstück aufgebrachten Kräften verursacht werden, minimiert ist.

Diese Aufgabe wird mit einem Gestell mit den Merkmalen des Anspruchs 1 und insbesondere dadurch gelöst, dass der Schlitten den Linearantrieb trägt, dass das Arbeitsorgan mit dem Stellweg des Linearantriebs fluchtet, und dass das Auflager derart ausgebildet ist, dass es einer kraftbedingten Verschiebung des Schlittens infolge einer Kraftaufbringung durch den Linearantrieb auf ein auf der Grundplatte positionierbares Werkstück entgegenwirkt.

Erfindungsgemäß wird der Linearantrieb also nicht von der Säule des Gestells der Schweißmaschine sondern von einem zusätzlichen Auflager getragen, welches beispielsweise durch ein Stützglied gebildet werden kann, das von der Grundplatte getragen wird, worauf später noch genauer eingegangen wird. Zwar kann dieses Auflager beispielsweise durch entsprechende Dimensionierung des genannten Stützglieds verhältnismäßig steif ausgebildet werden, so dass sich dieses infolge der von dem Linearantrieb erzeugten Schweißkraft verhältnismäßig wenig verformt; nichtsdestotrotz lassen sich etwaige Verformungen des Auflagers bzw. des Stützglieds insbesondere in vertikaler Richtung nicht vollkommen ausschließen, weshalb es zur Vermeidung unerwünschter Zwangsspannungen in dem Linearantrieb sowie in dem diesen tragenden Schlitten erfindungsgemäß vorgesehen ist, dass dieser Schlitten verschieblich entlang der Führungsschiene geführt ist, die sich in vertikaler Richtung entlang der Säule erstreckt. Der Schlitten mitsamt dem Linearantrieb kann daher in vertikaler Richtung geführt ausweichen, wenn das den Schlitten tragende Auflager geringfügig in vertikaler Richtung nach oben infolge einer von dem Linearantrieb erzeugten Schweißkraft ausgelenkt wird. Die Säule wird infolge der Schweißkraft hingegen nicht ausgelenkt, wodurch in der gewünschten Weise etwaige Unparallelitäten zwischen Sonotrode und Werkstück vermieden werden.

Um sicherzustellen, dass der Schlitten, der den Linearantrieb trägt, infolge der von dem Linearantrieb erzeugten Schweißkraft eine weitestgehend nur in vertikaler Richtung orientierte Bewegungskomponente erfährt, ist es des Weiteren vorgesehen, dass das Arbeitsorgan in Form der Sonotrode mit dem Stellglied des Linearantriebs fluchtet bzw. in Verlängerung des Stellwegs desselben angeordnet ist. Sofern hier davon die Rede ist, dass das Arbeitsorgan mit dem Linearantrieb bzw. dessen Stellweg oder mit anderen Positionen fluchtet, so bedeutet dies, dass im Wesentlichen kein Versatz zwischen dem Arbeitsorgan und dem Linearantrieb bzw. dessen Stellweg oder den anderen Positionen existiert. Es werden somit so gut wie keine Versatzmomente erzeugt, so dass der Schlitten nicht verkantet. Somit kann die gewünschte Ausrichtung zwischen Arbeitsorgan und Werkstück selbst unter Last im Wesentlichen beibehalten werden.

Nachfolgend wird nun auf vorteilhafte Ausführungsformen der Erfindung eingegangen, wobei sich weitere Ausführungsformen auch aus den Unteransprüchen, der Figurenbeschreibung sowie den Zeichnungen ergeben können.

Zwar kann das Auflager für den Schlitten, der den Linearantrieb trägt, entsprechend den voranstehenden Ausführungen durch ein Stützglied gebildet werden, das mit der Grundplatte verbunden ist; gemäß einer einfachen Ausführungsform wäre es jedoch ebenfalls möglich, dass das in Rede stehende Auflager beispielsweise durch einen Kragträger, eine Konsole oder dergleichen gebildet wird, der bzw. die fester Bestandteil der Fertigungsstraße ist, in der sich das Schweißgestell befindet. Beispielweise kann die Grundplatte mitsamt der Säule auf einem Tisch stehen, wohingegen das Auflager durch ein bauseits ortsfestes Konstruktionsglied wie beispielweise einen Mauervorsprung oder eine Stützenkonsole oder dergleichen gebildet wird. In diesem Falle kann das Auflager den Schlitten in horizontaler Richtung verschieblich lagern, um so etwaige Bewegungsunterschiede zwischen dem ortfesten Konstruktionsglied und dem Schlitten ausgleichen zu können. Beispielsweise kann der Schlitten über eine horizontale Kulissenführung mit dem Auflager gekoppelt sein, welche durch einen in einem Schlitz geführten Zapfen gebildet wird.

Um jedoch bei der Aufstellung des Schweißgestells von äußeren Randbedingungen unabhängig zu sein, ist es entsprechend den voranstehenden Ausführungen gemäß einer bevorzugten Ausführungsform vorgesehen, dass das Auflager durch ein Stützglied gebildet wird, das sowohl mit dem Schlitten, der den Linearantrieb trägt, als auch mit der Grundplatte vorzugsweise gelenkig verbunden ist. Das Stützglied ist somit integraler Bestandteil des erfindungsgemäßen Gestells, so dass das Schweißgestell im Grunde genommen an beliebigen Orten aufgestellt werden und zum Einsatz kommen kann.

Gemäß einer einfachen Ausführungsform kann das Stützglied beispielsweise durch einen verhältnismäßig starren Stab bzw. Träger gebildet werden, welcher die Grundplatte mit dem Schlitten, der den Linearantrieb trägt, verbindet. Durch den Stab bzw. Träger wird somit gewissermaßen der Schlitten mit der Grundplatte gekoppelt, so dass der Schlitten infolge einer von dem Linearantrieb erzeugten Schweißkraft sich nur im Rahmen der elastischen Verformung des Stabs bzw. des Trägers verformen kann.

Da ein derartiger linearer Stab bzw. Träger jedoch den Arbeitsraum zwischen dem Schlitten und der Grundplatte beeinträchtigen kann, ist es gemäß einer bevorzugten Ausführungsform vorgesehen, dass das Stützglied durch zumindest einen vorzugsweise im Wesentlichen C-förmigen Bügel gebildet wird, welcher im Bereich seiner beiden freien Enden gelenkig mit dem Schlitten bzw. der Grundplatte verbunden ist. Vorzugsweise kann dabei der zumindest eine im Wesentlichen C-förmige Bügel einen Stegabschnitt und einen ersten sowie einen zweiten Flanschabschnitt aufweisen, wobei der Stegabschnitt parallel zu der Säule des Gestells verläuft und die beiden Flanschabschnitte kragartig von dem Stegabschnitt abstehen. In diesem Falle ist der erste Flanschabschnitt an seinem freien Ende mit dem Schlitten für den Linearantrieb gelenkig verbunden, wohingegen der zweite Flanschabschnitt an seinem freien Ende mit der Grundplatte gelenkig verbunden ist. Vorzugsweise wird dabei der zweite Flanschabschnitt von der Grundplatte aufgenommen, wozu die Grundplatte einen Aufnahmehohlraum ausbilden kann, in den sich der jeweilige Bügel mit seinem zweiten Flanschabschnitt hineinerstreckt. Der Arbeitsraum zwischen dem Schlitten und der Grundplatte wird somit gewissermaßen von dem zumindest einen im Wesentlichen C-förmigen Bügel teilweise umgeben, so dass der Arbeitsraum frei von Beeinträchtigungen durch den Bügel ist.

Zwar kann es gemäß einer Ausführungsform ausreichend sein, den Schlitten und die Grundplatte über nur einen einzigen Bügel miteinander zu verbinden; da dies jedoch zu unsymmetrischen Belastungszuständen in dem Gestell führen kann, ist es gemäß einer bevorzugten Ausführungsform vorgesehen, dass das Gestell über zwei im Wesentlichen C-förmige Bügel verfügt, deren Stegabschnitte die Säule des Gestells beiderseitig beflanken. Jeder der beiden Bügel nimmt somit annähernd die gleiche Last auf, wodurch etwaigen Verformungen senkrecht zur Bügelebene infolge unsymmetrischer Belastungszustände entgegengewirkt wird.

Um sicherzustellen, dass der Schlitten, der den Linearantrieb trägt, infolge der von dem Linearantrieb erzeugten Schweißkraft eine weitestgehend nur in vertikaler Richtung orientierte Bewegungskomponente erfährt, ist es entsprechend den voranstehenden Erläuterungen vorgesehen, dass das Arbeitsorgan in Form der Sonotrode mit dem Stellglied des Linearantriebs fluchtet bzw. in Verlängerung des Stellwegs desselben angeordnet ist. Zusätzlich kann es zur Sicherstellung ausschließlich vertikaler Bewegungskomponenten des Schlittens und zur Minimierung einer Verbiegung des Gestells vorgesehen sein, dass die gelenkigen Verbindungsstellen des Stützglieds mit dem Schlitten und der Grundplatte mit dem Steilweg des Linearantriebs fluchten. Mit anderen Worten befinden sich also der Linearantrieb und das Arbeitsorgan sowie die Verbindungsstellen des Stützglieds mit dem Schlitten und der Grundplatte im Wesentlichen auf einer Geraden, da hierdurch erreicht werden kann, dass eine durch den Linearantrieb hervorgerufene Schweißkraft weitestgehend in eine rein vertikale Bewegungskomponente des Schlittens umgesetzt wird.

Gemäß einer weiteren Ausführungsform ist es vorgesehen, dass die Sonotrode von einem Schwinggebilde angetrieben, das ebenfalls entlang der Führungsschiene verschieblich geführt ist, und zwar beispielsweise über einen zweiten Schlitten, der seinerseits die Sonotrode trägt. Es wird somit nur eine einzige Führungsschiene benötigt, um die verschiebliche Lagerung der beiden Schlitten entlang der Säule des Gestells realisieren zu können.

Gemäß noch einer weiteren Ausführungsform ist es vorgesehen, dass eine Verformungsmesseinrichtung wie beispielsweise ein Dehnmessstreifen an dem Stützglied vorgesehen ist, die sich vorzugsweise im Bereich einer Schwächung des Stützglieds bzw. einer der Bügel befindet. Die Verformungsmesseinrichtung ist dabei eingerichtet, um eine für die von dem Linearantrieb aufgebrachte Kraft repräsentative Verformungsgröße des Stützglieds einer Kraftregeleinrichtung zur Verfügung zu stellen, so dass diese die Verformungsgröße oder eine daraus abgeleitete Kraftgröße als Regelgröße im Rahmen einer Kraftregelung für den Linearantrieb berücksichtigen kann. So wird sich nämlich das Stützglied mit zunehmender Schweißkraft umso mehr verformen, so dass die Verformung des Stützglieds für die aufgebrachte Schweißkraft repräsentativ ist. Um die tatsächlich aufgebrachte Schweißkraft ermitteln zu können, bedarf es daher keiner indirekter Messverfahren, die beispielsweise zur Bestimmung der Schweißkraft auf den Motorstrom zurückgreifen, wenn der Linearantrieb beispielsweise als Linearmotor oder Spindeltrieb realisiert ist; vielmehr besteht eine direkte Beziehung zwischen der Verformung des Stützglieds und der aufgebrachten Schweißkraft. Diese Beziehung kann in der Kraftregeleinrichtung oder in der Verformungsmesseinrichtung als Nachschlagetabelle oder mathematische Funktion hinterlegt sein, so dass aus der Verformung des Stützglieds direkt eine Aussage über die aktuelle Schweißkraft getroffen werden kann, so dass diese im Rahmen einer geschlossenen Regelschleife als Regelgröße bei einer Kraftregelung des Linearantriebs berücksichtigt werden kann.

Wie aus den voranstehenden Ausführungen hervorgeht, wird im unbelasteten Zustand das Gewicht der beiden Schlitten, des Linearantriebs und des Schwinggebildes einschließlich des der Sonotrode über das Stützglied abgetragen. Da je nach Einsatzzweck der Schweißmaschine unterschiedliche Sonotroden und Schwinggebilde zum Einsatz kommen können, führt dies dazu, dass im unbelasteten Zustand das Stützgebilde eine unterschiedlich starke bzw. große Vorverformung erfährt. Da diese Vorverformung auch von der Verformungsmesseinrichtung erfasst wird, ist es daher gemäß einer weiteren Ausführungsform vorgesehen, dass die Kraftregeleinrichtung ferner eingerichtet ist, um die von der Verformungsmesseinrichtung zur Verfügung gestellte Verformungsgröße in Abhängigkeit einer Vorverformung des Stützglieds zu kalibrieren. Die Kraftregeleinrichtung ist somit gewissermaßen eingerichtet, um eine Tara-Funktion und somit einen Nullabgleich der Verformungsmesseinrichtung durchzuführen.

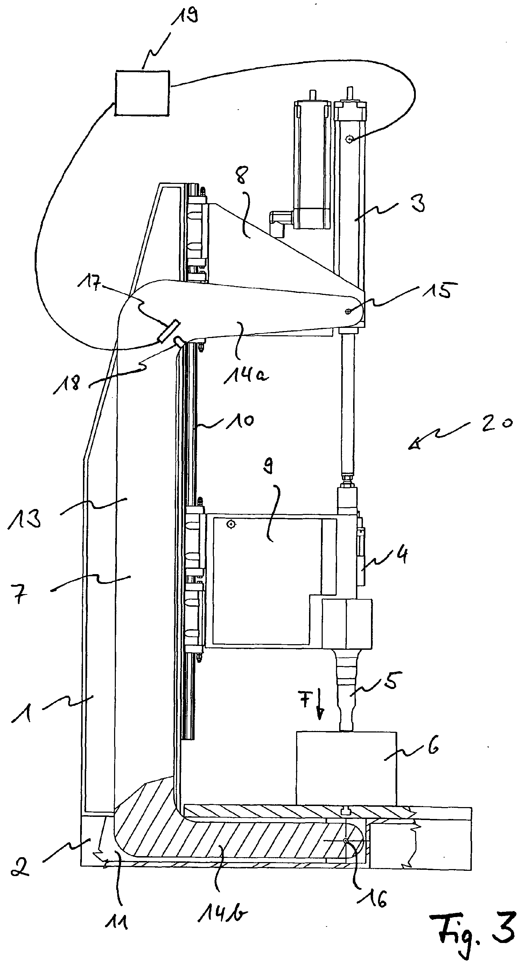

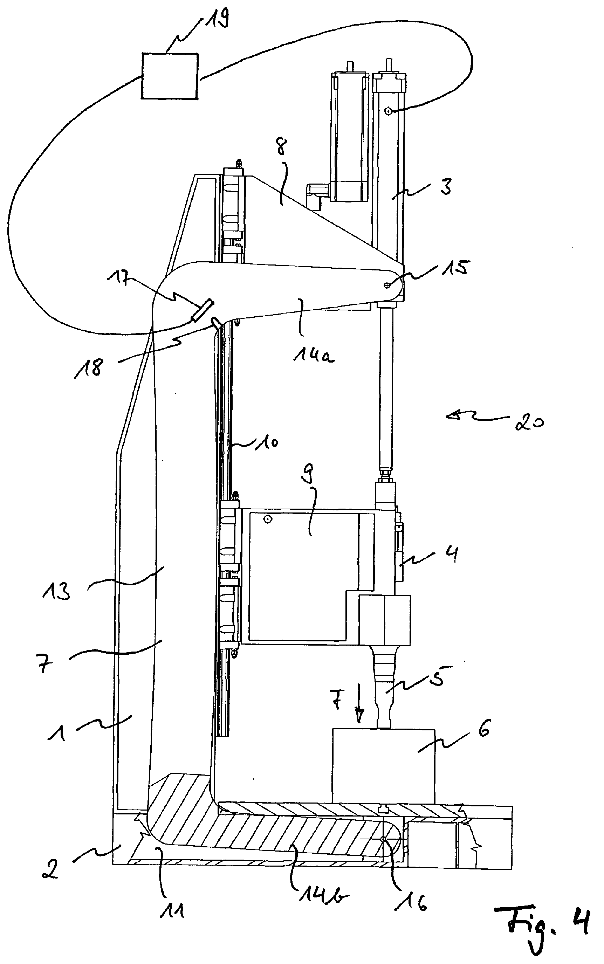

Nachfolgend wird die Erfindung nun rein beispielhaft unter Bezugnahme auf die Fig. 3 und 4 erläutert. Es zeigen:
- Fig. 1: ein dem Grunde nach bekanntes Gestell für eine Schweißmaschine im unbelasteten Zustand;
- Fig. 2: das Gestell der Fig. 1 im belasteten Zustand;
- Fig. 3: eine Seitenansicht eines erfindungsgemäßen Gestells im unbelasteten Zustand; und
- Fig. 4: das Gestell der Fig. 3 im belasteten Zustand.

Wie der Fig. 3 entnommen werden kann, weist das erfindungsgemäße Gestell 20 für eine Schweißmaschine eine als Standfuß für die Schweißmaschine dienende Grundplatte 2 auf, welche hier in teilweise weggebrochener Darstellung gezeigt ist und zur Aufnahme eines Werkstücks 6 dient. Ferner weist das Gestell 20 eine aufrechtstehende Säule 1 auf, die biegesteif mit der Grundplatte 2 verbunden ist. An der Säule 1 ist eine Führungsschiene 10 angebracht, die sich in Längserstreckung der Säule 1 in vertikaler Richtung erstreckt. Die Führungsschiene 10 dient dabei zum einen der verschieblichen Lagerung eines ersten Schlittens 8 für einen Linearantrieb 3 im Bereich des oberen Endes der Stütze 1 sowie eines zweiten Schlittens 9 für ein Schwinggebilde 4 für eine Sonotrode 5 in einem Arbeitsbereich zwischen dem ersten Schlitten 8 und der Grundplatte 2.

Wie bereits angedeutet ist der erste Schlitten 8 entlang der Führungsschiene 10 verschieblich geführt und trägt einen Linearantrieb 3, bei dem es sich beispielsweise um einen Spindeltrieb, eine Kolbenzylindereinheit oder einen Linearmotor handeln kann und welcher dazu dient, um auf das Werkstück 6 über die als Arbeitsorgan dienende Sonotrode 5 eine Schweißkraft F aufzubringen. Im Unterschied zu dem an sich bekannten Schweißgestell gemäß Fig. 1 ist somit der Linearantrieb 3 nicht starr über einem Kragarm mit der Säule 1 verbunden; vielmehr ist es erfindungsgemäß vorgesehen, dass der Linearantrieb 3 in vertikaler Richtung verschieblich an der Säule 1 gelagert ist.

Um trotz dieser Verschieblichkeit mit Hilfe des Linearantriebs 3 auf das Werkstück 6 die erforderliche Schweißkraft F aufbringen zu können, ist es erfindungsgemäß vorgesehen, dass der erste Schlitten 8 von einem Auflager getragen wird, das in der hier dargestellten Ausführungsform durch zwei C-förmige Bügel 7 gebildet wird, die die Säule 1 des Gestells 20 beiderseits beflanken. Jeder der beiden im Wesentlichen C-förmigen Bügel 7 weist dabei einen Stegabschnitt 13 und einen ersten sowie einen zweiten Flanschabschnitt 14a, 14b auf, die kragartig von dem Stegabschnitt 13 abstehen und einstückig mit diesem ausgebildet sind. Der erste Flanschabschnitt 14a des jeweiligen Bügels 7 ist dabei an seinem freien Ende an einer Verbindungsstelle 15 mit dem ersten Schlitten 8 beispielsweise mittels einer Bolzenverbindung gelenkig verbunden. Gleichermaßen ist auch der zweite Flanschabschnitt 14b an seinem freien Ende an einer Verbindungsstelle 16 mit der Grundplatte 2 beispielsweise mittels einer Bolzenverbindung gelenkig verbunden, wozu er sich in einen Aufnahmehohlraum 11 hineinstreckt, den die Grundplatte 2 ausbildet. Die beiden Bügel 7 werden somit durch die Grundplatte 2 in vertikaler Richtung abgestützt, indem diese an der Grundplatte 2 gelenkig angebracht sind. Durch die beiden Bügel 7 sind somit der erste Schlitten 8 und die Grundplatte 2 miteinander gekoppelt, was zur Folge hat, dass die beiden Bügel 7 einer kraftbedingten Verschiebung des ersten Schlittens 8 durch den Linearantrieb 3 entgegenwirken, was jedoch nicht heißt, dass der erste Schlitten 8 keine Verschiebung erfährt. Vielmehr werden die freien Enden der beiden Bügelflansche 14a, 14b in vertikaler Richtung parallel zur Säule 1 auseinandergespreizt, wenn durch den Linearantrieb 3 eine Schweißkraft F über den zweiten Schlitten 9 und das davon getragene Schwinggebilde 4 auf das Arbeitsorgan 5 übertragen wird. Mit anderen Worten wird also die abhebende Reaktionskraft, welche als Reaktion zu der auf das Werkstück 6 aufgebachten Schweißkraft F verursacht wird, über die Bügel 7 als Zugkraft in die Grundplatte 2 eingeleitet, was aufgrund der gelenkigen Verbindung der beiden Flanschabschnitte 14a, 14b mit dem Schlitten 8 bzw. der Grundplatte 2 möglich ist. Bei den beiden gelenkigen Verbindungsstellen 15, 16 kann es sich somit beispielsweise um Bolzenverbindungen oder beliebige andere Verbindungsarten handeln, sofern sich mit diesen abhebende Kräfte auf die Bügel 7 und von diesen auf die Grundplatte 2 übertragen lassen.

Damit hierbei das freie Ende des oberen Bügelflanschs 14a ausschließlich eine Bewegungskomponente in vertikaler Richtung erfährt, ist es bei der dargestellten bevorzugten Ausführungsform vorgesehen, dass das Arbeitsorgan 5 mit dem Linearantrieb 3 bzw. dessen Stellweg fluchtet und dass auch die gelenkigen Verbindungsstellen 15, 16 der beiden Flansche 14a, 14b mit dem ersten Schlitten 8 bzw. der Grundplatte 2 mit dem Stellweg des Linearantriebs 3 fluchten. Sofern hier davon die Rede ist, dass das Arbeitsorgan 5 mit dem Linearantrieb 3 bzw. dessen Stellweg fluchtet, so bedeutet dies, dass im Wesentlichen kein Versatz zwischen dem Arbeitsorgan 5 und dem Linearantrieb 3 bzw. dessen Stellweg existiert; Durch den Linearantrieb 3 werden somit keine oder nur geringe Kraftkomponenten senkrecht zu dessen Stellweg hervorgerufen, was in der gewünschten Weise zur Folge hat, dass das freie Ende des oberen Bügelflanschs 14a ausschließlich eine Bewegungskomponente in vertikaler Richtung erfährt. Damit durch diese vertikale Bewegungskomponente keine unerwünschten Zwangsspannungen in dem Linearantrieb 3 bzw. in dem den Linearantrieb 3 tragenden ersten Schlitten 8 hervorgerufen werden, ist der erste Schlitten 8 in der erfindungsgemäßen Art und Weise verschieblich an der Führungsschiene 10 gelagert, so dass dieser um das gleiche Maß in vertikaler Richtung versetzt wird wie das freie Ende des oberen Bügelflanschs 14a. Davon abgesehen werden die Bügel 7 durch den ersten Schlitten 8 in horizontaler Richtung an der Säule 1 abgestützt, so dass die Bügel 7 in der gewünschten Position gehalten werden. Der erste Schlitten 8 bildet somit für die beiden Bügel 7 im statischen Sinne ein einwertiges bzw. verschiebliches Auflager, das die Bügel 7 daran hindert, um die Verbindungstelle 16 mit der Grundplatte umzukippen, welche für die Bügel 7 im statischen Sinne ein zweiwertiges bzw. gelenkiges Auflager bildet.

Zwar wäre es dem Prinzip nach ebenfalls möglich, die beiden Verbindungsstellen 15, 16 anstelle über C-förmige Bügel, direkt mittels eines Stabs oder Trägers gelenkig miteinander zu verbinden. Hierdurch würde jedoch der Arbeitsraum zwischen dem ersten Schlitten 8 und der Grundplatte 2 beeinträchtigt werden, weshalb gemäß der dargestellten Ausführungsform zwei C-förmigen Bügeln 7 Vorrang zu geben ist.

Um die von dem Linearantrieb 3 auf das Werkstück 6 ausgeübte Schweißkraft F bestimmen zu können, ist in der dargestellten Ausführungsform an zumindest einem der Bügel 7 eine Verformungsmesseinrichtung in Form eines Dehnmessstreifens 17 vorgesehen. In der dargestellten Ausführungsform ist der Dehnmessstreifen 17 dabei im Übergangsbereich zwischen dem oberen Bügelflansch 14a und dem Bügelsteg 13 und somit in einem Bereich angeordnet, in dem verhältnismäßig große Relativverformungen stattfinden. Um derartige Relativverformungen für die Verformungsmesseinrichtung 17 noch wahrnehmbarer zu machen, ist der Bügel 7 in dem genannten Übergangsbereich gezielt mit einer Schwächung 18 versehen. Die von der Verformungsmesseinrichtung 17 erfasste Verformungsgröße ist dabei für die von dem Linearantrieb 3 aufgebrachte Schweißkraft F repräsentativ, wobei die Beziehung zwischen Verformung und Schweißkraft F in einer Nachschlagetabelle hinterlegt sein kann.

In der dargestellten Ausführungsform wird nun die von der Verformungsmesseinrichtung 17 erfasste Verformungsgröße einer Kraftregeleinrichtung 19 zur Verfügung gestellt, welche derart eingerichtet ist, um die Verformungsgröße oder eine daraus abgeleitete Kraftgröße als Regelgröße im Rahmen einer Kraftregelung für den Linearantrieb 3 zu berücksichtigen. Die Kraftregeleinrichtung 19 vergleicht also die Verformungsgröße oder eine daraus abgeleitete Kraftgröße mit einem Sollwert der Schweißkraft F, um in Abhängigkeit der Differenz zwischen dem Sollwert und der Regelgröße eine Stellgröße zur Regelung des Linearantriebs 3 zu bestimmen.

Da im unbelasteten Zustand das Gewicht der beiden Schlitten 8,9, des Linearantriebs 3 und des Schwinggebildes 4 einschließlich der Sonotrode 5 über das Stützglied abgetragen wird, kann es in Abhängigkeit des verwandten Sonotrodentyps und Schwinggebildes dazu kommen, dass das Stützgebilde im unbelasteten Zustand unterschiedlich starke bzw. große Vorverformungen erfährt. Da diese Vorverformungen auch von der Verformungsmesseinrichtung 17 erfasst werden, ist es daher in der dargestellten Ausführungsform vorgesehen, dass die Kraftregeleinrichtung 19 ferner eingerichtet ist, um die von der Verformungsmesseinrichtung 17 zur Verfügung gestellte Verformungsgröße in Abhängigkeit einer Vorverformung der Bügel 7 zu kalibrieren. Die Kraftregeleinrichtung 19 ist somit gewissermaßen eingerichtet, um eine Tara-Funktion und somit einen Nullabgleich der Verformungsmesseinrichtung durchzuführen.

### Bezugszeichenliste

- 1: Säule
- 2: Grundplatte
- 3: Linearantrieb
- 4: Schwinggebilde
- 5: Arbeitsorgan bzw. Sonotrode
- 6: Werkstück
- 7: Bügel
- 8: erster Schlitten
- 9: zweiter Schlitten
- 10: Führungsschiene
- 11: Aufnahmeholraum in 2
- 12: Kragarm
- 13: Steg von 7
- 14a, 14b: oberer bzw. unterer Flansch von 7
- 15: obere Verbindungsstelle
- 16: untere Verbindungsstelle
- 17: Verformungsmesseinrichtung
- 18: Schwächung
- 19: Kraftregeleinrichtung
- 20: Gestell

- F: Schweißkraft

## Patentansprüche

1. Gestell (20) für eine Schweißmaschine, insbesondere für eine Ultraschall-Schweißmaschine, umfassend:
eine Grundplatte (2);
eine Säule (1), die mit der Grundplatte (2) verbunden ist;
eine Führungsschiene (10), die entlang der Säule (1) vorgesehen ist;
einen Linearantrieb (3) zum Aufbringen einer Kraft von einem Arbeitsorgan (5) auf ein auf der Grundplatte (2) positionierbares Werkstück (6);
einen Schlitten (8), der entlang der Führungsschiene (10) verschieblich geführt ist; und
ein Auflager, das den Schlitten (8) trägt;
**dadurch gekennzeichnet, dass :**
der Schlitten (8) den Linearantrieb (3) trägt;
das Arbeitsorgan (5) mit dem Stellweg des Linearantriebs (3) fluchtet; und
das Auflager derart ausgebildet ist, um einer kraftbedingten Verschiebung des Schlittens (8) infolge einer Kraftaufbringung durch den Linearantrieb (3) auf ein auf der Grundplatte (2) positionierbares Werkstück entgegenzuwirken.

2. Gestell nach Anspruch 1,
**dadurch gekennzeichnet, dass**
das Auflager durch ein bauseits ortsfestes Konstruktionsglied, beispielweise durch einen Mauervorsprung, eine Stützenkonsole oder einen bauseits instationären Kragträger, gebildet wird, wobei der Schlitten (8) vorzugsweise in horizontaler Richtung verschieblich durch das Konstruktionsglied abgestützt wird.

3. Gestell nach Anspruch 1,
**dadurch gekennzeichnet, dass**
das Auflager durch ein Stützglied gebildet wird, das mit sowohl mit dem Schlitten (8) als auch mit der Grundplatte (2) vorzugsweise gelenkig verbunden ist.

4. Gestell nach Anspruch 2,
**dadurch gekennzeichnet, dass**
dass Stützglied durch zumindest einen vorzugsweise im Wesentlichen C-förmigen Bügel (7) gebildet wird, welcher im Bereich seiner beiden freien Enden gelenkig mit dem Schlitten (8) bzw. mit der Grundplatte (2) verbunden ist.

5. Gestell nach Anspruch 4,
**dadurch gekennzeichnet, dass**
der zumindest eine vorzugsweise im Wesentlichen C-förmige Bügel (7) einen Stegabschnitt (13) und einen ersten sowie einen zweiten Flanschabschnitt (14a, 14b) aufweist, wobei der Stegabschnitt (13) parallel zu der Säule (1) des Gestells (20) verläuft und die beiden Flanschabschnitte (14a, 14b) kragartig von dem Stegabschnitt (13) abstehen, wobei der erste Flanschabschnitt (14a) an seinem freien Ende mit dem Schlitten (8) gelenkig verbunden ist und der zweite Flanschabschnitt (14b) an seinem freien Ende mit der Grundplatte (2) gelenkig verbunden ist.

6. Gestell nach Anspruch 4,
**dadurch gekennzeichnet, dass** der zweite Flanschabschnitt (14b) von der Grundplatte (2) aufgenommen wird, wozu die Grundplatte (2) vorzugsweise einen Aufnahmehohlraum (11) ausbildet, in den sich der jeweilige Bügel (7) mit seinem zweiten Flanschabschnitt (14b) hineinerstreckt.

7. Gestell nach einem der Ansprüche 4 bis 6,
**dadurch gekennzeichnet, dass**
das Gestell (20) über zwei im Wesentlichen C-förmige Bügel (7) verfügt, deren Stegabschnitte die Säule (1) des Gestells (20) beiderseits beflanken.

8. Gestell nach Anspruch 3,
**dadurch gekennzeichnet, dass**
die gelenkigen Verbindungsstellen (15, 16) des Stützglieds mit dem Schlitten (8) und der Grundplatte (2) mit dem Stellweg des Linearantriebs (3) fluchten.

9. Gestell nach einem der vorstehenden Ansprüche,
**dadurch gekennzeichnet, dass**
als Arbeitsorgan (5) eine Sonotrode (5) vorgesehen ist, die von einem Schwinggebilde (4) angetrieben wird, wobei das Schwinggebilde (4) ebenfalls entlang der Führungsschiene (10) verschieblich geführt ist.

10. Gestell nach einem der vorstehenden Ansprüche,
**dadurch gekennzeichnet, dass**
eine Verformungsmesseinrichtung (17) an dem Stützglied vorgesehen ist, die sich vorzugsweise im Bereich einer Schwächung (18) des Stützglieds befindet, wobei die Verformungsmesseinrichtung (17) eine für die von dem Linearantrieb (3) aufgebrachte Kraft repräsentative Verformungsgröße des Stützglieds einer Kraftregeleinrichtung (19) zur Verfügung stellt, welche eingerichtet ist, um die Verformungsgröße oder eine daraus abgeleitete Kraftgröße als Regelgröße im Rahmen einer Kraftregelung für den Linearantrieb (3) zu berücksichtigen.

11. Gestell nach Anspruch 10,
**dadurch gekennzeichnet, dass**
die Kraftregeleinrichtung (19) ferner eingerichtet ist, um die von der Verformungsmesseinrichtung (17) zur Verfügung gestellte Verformungsgröße in Abhängigkeit einer Vorverformung des Stützglieds zu kalibrieren.

## Claims

1. A frame (20) for a welding machine, in particular for an ultrasonic welding machine, comprising:
a base plate (2);
a column (1) which is connected to the base plate (2);
a guide rail (10) which is provided along the column (1);
a linear drive (3) for applying a force from a work member (5) to a workpiece (6) which can be positioned on the base plate (2);
a slide (8) which is displaceably guided along the guide rail (10); and
a support which supports the slide (8),
**characterized in that**:
the slide (8) supports the linear drive (3);
the work member (5) is aligned with the displacement path of the linear drive (3); and
the support is configured to counteract a force-induced displacement of the slide (8) as a consequence of a force application by the linear drive (3) onto a workpiece which can be positioned on the base plate (2).

2. A frame in accordance with claim 1,
**characterized in that**
the support is formed by a construction member which is in a fixed position at the construction side, for example by a wall projection, a support console or a collar support which is non-stationary at the construction side, with the slide (8) preferably being displaceably supported by the construction member in the horizontal direction.

3. A frame in accordance with claim 1,
**characterized in that**
the support is formed by a support member which is preferably connected in an articulated manner both to the slide (8) and to the base plate (2).

4. A frame in accordance with claim 2,
**characterized in that**
the support member is formed by at least one preferably substantially C-shaped hoop (7) which is connected in an articulated manner in the region of its two free ends to the slide (8) or to the base plate (2).

5. A frame in accordance with claim 4,
**characterized in that**
the at least one preferably substantially C-shaped hoop (7) has a web section (13) and a first and a second flange section (14a, 14b), with the web section (13) extending in parallel with the column (1) of the frame (20) and the two flange sections (14a, 14b) projecting from the web section (13) like a collar, with the first flange section (14a) being connected in an articulated manner at its free end to the slide (8) and the second flange section (14b) being connected in an articulated manner at its free end to the base plate (2).

6. A frame in accordance with claim 4,
**characterized in that**
the second flange section (14b) is received by the base plate (2), for which purpose the base plate (2) preferably forms a receiving hollow space (11) into which the second flange section (14b) of the respective hoop (7) extends.

7. A frame in accordance with any one of the claims 4 to 6, **characterized in that**
the frame (20) has two substantially C-shaped hoops (7) whose web sections flank the column (1) of the frame (20) at both sides.

8. A frame in accordance with claim 3,
**characterized in that**
the articulated connection points (15, 16) of the support member to the slide (8) and to the base plate (2) are aligned with the displacement path of the linear drive (3).

9. A frame in accordance with any one of the preceding claims,
**characterized in that**
a sonotrode (5) is provided as the work member (5) and is driven by a resonant unit (4), with the resonant unit (4) likewise being displaceably guided along the guide rail (10).

10. A frame in accordance with any one of the preceding claims,
**characterized in that**
a deformation measuring device (17) is provided at the support member and is preferably located in the region of an attenuation (18) of the support member, with the deformation measuring device (17) providing a deformation factor of the support member representative for the force applied by the linear drive (3) to a force regulating device (19) which is adapted to take account of the deformation factor or of a force factor derived therefrom as a regulation factor within the framework of a force regulation for the linear drive (3).

11. A frame in accordance with claim 10,
**characterized in that**
the force regulating device (19) is furthermore adapted to calibrate the deformation factor provided by the deformation measuring device (17) in dependence on a pre-deformation of the support member.

## Revendications

1. Châssis (20) pour une machine de soudage, en particulier pour une machine de soudage par ultrasons, incluant :
une plaque de base (2) ;
une colonne (1) qui est reliée à la plaque de base (2) ;
un rail de guidage (10) qui est prévu le long de la colonne () ;
un entraînement linéaire (3) pour appliquer une force d'un organe de travail (5) à une pièce à oeuvrer (6) susceptible d'être positionnée sur la plaque de base (2),
un chariot (8) qui est guidé en translation le long du rail de guidage (10) ; et
un coussinet qui porte le chariot (8) ;
**caractérisé en ce que**
le chariot (8) porte l'entraînement linéaire (3) ;
l'organe de travail (5) est en alignement avec la course de manoeuvre de l'entraînement linéaire (3) ; et
le coussinet est réalisé de manière à s'opposer à un déplacement à force du chariot (8) causé par l'application d'une force par l'entraînement linéaire (3) sur une pièce à oeuvrer susceptible d'être positionnée sur la plaque de base (2).

2. Châssis selon la revendication 1,
**caractérisé en ce que**
le coussinet est formé par un organe de construction stationnaire côté bâtiment, par exemple par une saillie de mur, une console de support ou un porte-à-faux non stationnaire côté bâtiment, le chariot (8) étant supporté de préférence en translation en direction horizontale par l'organe de construction.

3. Châssis selon la revendication 1,
**caractérisé en ce que**
le coussinet est formé par un organe de support qui est relié de préférence en articulation aussi bien au chariot (8) qu'à la plaque de base (2).

4. Châssis selon la revendication 2,
**caractérisé en ce que**
l'organe de support est formé par au moins un étrier (7) de préférence sensiblement en forme de C qui, dans la zone de ses deux extrémités libres, est relié en articulation au chariot (8) et à la plaque de base (2), respectivement.

5. Châssis selon la revendication 4,
**caractérisé en ce que**
ledit au moins un étrier (7) de préférence sensiblement en forme de C comprend une partie d'âme (13) et une première et une seconde partie de bride (14a, 14b), la partie d'âme (13) s'étendant parallèlement à la colonne (1) du châssis (20) et les deux parties de bride (14a, 14b) faisant saillie en porte-à-faux de la partie d'âme (13), la première partie de bride (14a) étant reliée en articulation par son extrémité libre au chariot (8), et la seconde partie de bride (14b) étant reliée en articulation par son extrémité libre à la plaque de base (2).

6. Châssis selon la revendication 4,
**caractérisé en ce que**
la seconde partie de bride (14b) est reçue par la plaque de base (2), ce pourquoi la plaque de base (2) forme de préférence un creux de réception (11) jusque dans lequel s'étend l'étrier respectif (7) par sa seconde partie de bride (14b).

7. Châssis selon l'une des revendications 4 à 6,
**caractérisé en ce que**
le châssis (20) dispose de deux étriers (7) sensiblement en forme de C dont les parties d'âme flanquent la colonne (1) du châssis (20) de part et d'autre.

8. Châssis selon la revendication 3,
**caractérisé en ce que**
les emplacements de liaison articulés (15, 16) de l'organe de support sont en alignement avec le chariot (8) et ceux de la plaque de base (2) sont en alignement avec la course de manoeuvre de l'entraînement linéaire (3).

9. Châssis selon l'une des revendications précédentes,
**caractérisé en ce que**
à titre d'organe de travail (5) est prévue une sonotrode (5) qui est entraînée par une structure oscillante (4), la structure oscillante (4) étant également guidée en translation le long du rail de guidage (10).

10. Châssis selon l'une des revendications précédentes,
**caractérisé en ce que**
sur l'organe de support est prévu un dispositif de mesure de déformation (17) qui s'étend de préférence dans la zone d'un affaiblissement (18) de l'organe de support, le dispositif de mesure de déformation (17) mettant à disposition d'un dispositif de régulation de force (19) une grandeur de déformation, représentative de la force fournie par l'entraînement linéaire (3), de l'organe de support, ledit dispositif de régulation étant conçu pour prendre en compte la grandeur de déformation ou une grandeur de force déduite de celle-ci à titre de grandeur de régulation dans le cadre d'une régulation de force pour l'entraînement linéaire (3).

11. Châssis selon la revendication 10,
**caractérisé en ce que**
le dispositif de régulation de force (19) est en outre conçu pour calibrer la grandeur de déformation, mise à disposition par le dispositif de mesure de déformation (17), en fonction d'une pré-déformation de l'organe de support.
